# EUROPÄISCHE PATENTANMELDUNG

(11) **EP 1 634 773 A1**
(43) Veröffentlichungstag der Anmeldung: **15.03.2006**
(21) Anmeldenummer: 05019519.7
(22) Anmeldetag: 08.09.2005
(51) Int. Cl.: B60R 9/045

(54) **Dachträger für Kraftfahrzeuge**

(30) Priorität: 14.09.2004 DE 102004044834
(71) Anmelder: ORIS FAHRZEUGTEILE HANS RIEHLE GmbH, 71696 Möglingen (DE)
(72) Erfinder: Nägele, Karl, 74321 Bietigheim-Bissingen (DE); Riehe, Jörg, 71679 Asperg (DE)
(74) Vertreter: Hoeger, Stellrecht & Partner Patentanwälte

(57) **Zusammenfassung**

Um einen Dachträger (10) für Kraftfahrzeuge mit einer Dachträgeraufnahme (22), umfassend einen Querträger (14) und endseitig des Querträgers (14) angeordnete Haltevorrichtungen (20), die relativ zueinander von einer Freigabestellung in eine Fixierstellung und umgekehrt bewegbare Halteelemente (60,100) aufweisen und die durch die Halteelemente (60,100) an der Dachträgeraufnahme fixierbar sind, derart zu schaffen, und daß dieser mit einer möglichst einfach aufgebauten und einfach betätigbaren Haltevorrichtung, wird vorgeschlagen, daß ein Verschluß-mechanismus (132) vorgesehen ist, mit welchem die Halteelemente (60,100) relativ zueinander in die Fixierstellung bringbar sind, und daß der Verschluß-mechanismus (132) einen bewegbaren Verschlußhebel (134) aufweist, welcher mindestens mit einem der Halteelemente (60,100) derart zusammenwirkt, daß der Verschlußhebel (134) in einer Lösestellung die Freigabestellung der Halteelemente (60,100) zuläßt, und daß der Verschlußhebel (134) über eine labile Totpunktstellung in eine neben dieser labilen Totpunktstellung liegende stabile Übertotpunktstellung bringbar ist, in welcher der Verschlußhebel (134) derart mindestens mit dem einen der Halteelemente (60,100) zusammenwirkt, daß diese in ihrer Fixierstellung festgelegt sind.

## Beschreibung

Die Erfindung betrifft einen Dachträger für Kraftfahrzeuge mit einer Dachträgeraufnahme, umfassend einen Querträger und endseitig des Querträgers angeordnete Haltevorrichtungen, die relativ zueinander von einer Freigabestellung in eine Fixierstellung und umgekehrt bewegbare Halteelemente aufweisen und die durch die Halteelemente an der Dachträgeraufnahme fixierbar sind.

Derartige Dachträger sind aus dem Stand der Technik bekannt. Bei diesen werden die Halteelemente üblicherweise durch Spannschrauben, oder Spannspindeln relativ zueinander bewegt und in der Fixierstellung fixiert.

Der Erfindung liegt ausgehend von diesem Stand der Technik die Aufgabe zugrunde, einen Dachträger mit einer möglichst einfach aufgebauten und einfach betätigbaren Haltevorrichtung zu schaffen.

Diese Aufgabe wird bei einem Dachträger der eingangs beschriebenen Art erfindungsgemäß dadurch gelöst, daß ein Verschlußmechanismus vorgesehen ist, mit welchem die Halteelemente relativ zueinander in die Fixierstellung bringbar sind, und daß der Verschlußmechanismus einen bewegbaren Verschlußhebel aufweist, welcher mindestens mit einem der Halteelemente derart zusammenwirkt, daß der Verschlußhebel in einer Lösestellung die Freigabestellung der Halteelemente zuläßt und daß der Verschlußhebel über eine labile Totpunktstellung in eine neben dieser labilen Totpunktstellung liegende Übertotpunktstellung bringbar ist, in welcher der Verschlußhebel derart mindestens mit dem einen der Halteelemente zusammenwirkt, daß diese in ihrer Fixierstellung festgelegt sind.

Der Vorteil der erfindungsgemäßen Lösung ist darin zu sehen, daß aufgrund des in die Übertotpunktstellung bringbaren Verschlußhebels eine einfache Möglichkeit besteht, durch Verschwenken des Verschlußhebels zwischen der Lösestellung der Übertotpunktstellung die Halteelemente zwischen ihrer Fixierstellung und ihrer Freigabestellung zu bewegen und in der Fixierstellung festzulegen.

Prinzipiell bestünde die Möglichkeit, daß der Verschlußhebel unmittelbar auf die Halteelemente oder mindestens eines der Halteelemente wirkt, beispielsweise dadurch, daß der Verschlußhebel in seiner Übertotpunktstellung eines der Halteelemente beaufschlagt und in der Fixierstellung hält.

Im Hinblick auf einen möglichst geringen Bauraum ist es jedoch besonders günstig, wenn der Verschlußmechanismus einen mit dem Verschlußhebel und mindestens einem der Halteelemente gekoppeltes Übertragungselement aufweist.

Das Übertragungselement könnte im einfachsten Fall ein Zugseil sein.

Besonders günstig ist es dabei, wenn das Übertragungselement ein Übertragungsarm ist, der aufgrund seiner Eigensteifigkeit sowohl in Richtung der Fixierstellung als auch in Richtung der Freigabestellung wirken kann.

Eine besonders vorteilhafte, und insbesondere einen großen Bewegungsweg mindestens eines der Halteelemente ergebende Lösung sieht vor, daß der Übertragungsarm mit dem Verschlußhebel einen Kniehebelmechanismus bildet.

Zweckmäßigerweise ist der Kniehebelmechanismus so konzipiert, daß er einen kurzen und einen langen Hebelarm aufweist.

Dabei ist es besonders günstig, wenn der kurze Hebelarm durch den Verschlußhebel und der lange Hebelarm durch den Übertragungshebel gebildet ist, da sich damit eine optimale Umsetzung der Schwenkbewegung des Verschlußhebels in eine Bewegung mindestens eines der Halteelemente erreichen läßt.

Um außerdem bei der Übertotpunktstellung des Verschlußhebels bei mindestens einem der Halteelemente noch eine ausreichend große Spannkraft an den Halteelementen zur Verfügung zu haben, ist vorzugsweise vorgesehen, daß der Übertragungsarm eine zum Erreichen der stabilen Übertotpunktstellung des Verschlußhebels beitragende Längenelastizität aufweist.

Unter einer Längenelastizität des Übertragungsarm ist dabei zu verstehen, daß der Übertragungsarm sich derart deformieren kann, daß ein Abstand eines den Übertragungsarm mit dem Verschlußhebel verbindenden Gelenks und ein Abstand eines den Übertragungsarm mit dem Halteelement verbindenden Gelenks elastisch variierbar ist.

Eine derartige Längenelastizität des Übertragungshebels wird vorzugsweise durch eine von einer gerade gestreckten Ausführung abweichende Form des Übertragungsarms, beispielsweise eine abgewinkelte oder gebogene Ausführungsform des Übertragungshebels erreicht.

Eine besonders zweckmäßige Lösung sieht vor, daß der Übertragungshebel sichelförmig ausgebildet ist.

Hinsichtlich der Stabilisierung der Übertotpunktstellung des Verschlußhebels wurden bislang keine näheren Angaben gemacht.

Zweckmäßigerweise erfolgt die Stabilisierung des Verschlußhebels in der Übertotpunktstellung durch einen Anschlag, gegen welchen der Verschlußhebel in der Übertotpunktstellung anlegbar ist.

Ein derartiger Anschlag kann grundsätzlich an beliebigen Teilen der Haltevorrichtung vorgesehen sein. Eine einfache und Übertotpunktstellung des Verschlußhebels eindeutig festlegende Lösung sieht vor, daß der Anschlag an einer Gehäusestruktur der Haltevorrichtung angeordnet ist.

Um zusätzliche Sicherheit zu schaffen, ist bei einer besonders bevorzugten Lösung eine Sicherungsvorrichtung für den Verschlußhebel vorgesehen. Diese kann beispielsweise einen den Verschlußhebel durchsetzenden Sicherungsstift umfassen.

Hinsichtlich der Ausbildung der Verbindung zwischen den Halteelementen und der Dachträgeraufnahme wurden bislang keine näheren Angaben gemacht. Um eine ausreichend große Last aufnehmen zu können, ist vorzugsweise vorgesehen, daß die Halteelemente an der Dachträgeraufnahme gegen eine Bewegung in wenigstens einer quer zur Längsrichtung der Dachträgeraufnahme verlaufenden ersten Richtung formschlüssig festlegbar sind, wobei in diesem Fall die erste Richtung die Richtung ist, mit welcher die auf dem Dachträger aufliegende Last auf die Dachträgeraufnahme wirkt.

Besonders günstig ist es, wenn die Halteelemente an der Dachträgeraufnahme gegen eine Bewegung in mindestens der ersten und einer quer zu dieser und quer zur Längsrichtung der Dachträgeraufnahme verlaufenden zweiten Richtung formschlüssig festlegbar sind, so daß zumindest in einer durch die beiden Richtungen aufgespannten Ebene eine formschlüssige Fixierung des Dachträgers an der Dachträgeraufnahme realisierbar ist.

Ferner hat es sich als vorteilhaft erwiesen, wenn die Halteelemente an der Dachträgeraufnahme gegen eine Bewegung in einer in Längsrichtung der Dachträgeraufnahme verlaufenden dritten Richtung kraftschlüssig fixierbar sind.

Dies läßt sich besonders günstig dadurch erreichen, daß die Halteelemente an der Dachträgeraufnahme durch Verspannen fixierbar sind.

Eine besonders stabile Verbindung läßt sich dann erreichen, wenn die Halteelemente die Dachträgeraufnahme in einander gegenüberliegenden Bereichen umgreifen.

Hinsichtlich der Bewegbarkeit der Halteelemente seitens der Verschlußvorrichtung wurden bislang keine näheren Angaben gemacht.

So wäre es beispielsweise denkbar, beide Halteelemente durch die Verschlußvorrichtung relativ zueinander zu bewegen.

Aus Gründen einer einfachen Ausrichtung des Dachträgers relativ zu der Dachträgeraufnahme bei der Montage ist zweckmäßigerweise vorgesehen, daß ein erstes der Halteelemente durch die Verschlußvorrichtung unbewegbar an einer Gehäusestruktur der Haltevorrichtung angeordnet ist.

Dabei ist es besonders zweckmäßig, wenn in diesem Fall das andere der Halteelemente durch die Verschlußvorrichtung relativ zu der Gehäusestruktur der Haltevorrichtung bewegbar ist.

Beispielsweise wäre es dabei denkbar, daß das andere der Halteelemente an der Gehäusestruktur bewegbar geführt ist, wobei eine bewegbare Führung beispielsweise eine Führungskulisse sein könnte, längs welcher das Halteelement bewegbar ist.

Eine besonders einfache Realisierung sieht jedoch vor, daß das andere der Halteelemente schwenkbar an der Gehäusestruktur gelagert ist.

Eine besonders günstige und raumsparende Ausbildung sieht vor, daß das andere der Halteelemente auf einer Seite einer Schwenkachse durch den Verschlußmechanismus beaufschlagbar ist und auf einer gegenüberliegenden Seite mit einem auf die Dachträgeraufnahme einwirkenden Spannbereich versehen ist.

Hinsichtlich der Betätigung des Verschlußhebels wurden bislang keine näheren So wäre es beispielsweise denkbar, den Verschlußhebel mit einem fest mit diesem verbundenen Betätigungsarm auszuführen.

Eine derartige Lösung wäre jedoch im Rahmen einer kompakten Ausführung der Haltevorrichtung nicht sinnvoll realisierbar gewesen.

Aus diesem Grund ist vorzugsweise vorgesehen, daß ein Betätigungselement lösbar mit dem Verschlußhebel verbindbar ist.

Durch eine derartige Lösung läßt sich in einfacher Weise ein langer Hebelarm zur Betätigung des Verschlußhebels erreichen, andererseits aber nach der Montage des erfindungsgemäßen Dachträgers durch ein Lösen des Betätigungselements eine optisch ansprechende kompakte Bauform der Haltevorrichtung sicherstellen.

Die Halteelemente können prinzipiell so ausgebildet sein, daß beide Halteelemente dazu beitragen, die Dachlast auf die Dachträgeraufnahme zu übertragen.

Besonders zweckmäßig ist es jedoch, wenn eines der Halteelemente die Dachlast auf die Dachträgeraufnahme überträgt.

Um eine optimale Anpassung an unterschiedliche Anbautoleranzen und insbesondere unterschiedlich verlaufende Dachträgeraufnahmen zu erreichen, ist vorzugsweise vorgesehen, daß eines der Halteelemente relativ zum Querträger ausrichtbar ist und somit auch relativ zur Dachträgeraufnahme ausrichtbar ist.

Die Ausrichtbarkeit sieht vorzugsweise eine Bewegbarkeit um eine quer zu dem Querträger verlaufende Drehachse vor, die insbesondere auch quer zu einer Unterseite des Querträgers verläuft.

Prinzipiell würde es ausreichen, wenn eines der Halteelemente relativ zum Querträger ausrichtbar ist. Besonders günstig ist es jedoch, wenn beide Halteelemente relativ zum Querträger ausrichtbar sind.

Eine besonders vorteilhafte Lösung sieht vor, daß eine Gehäusestruktur der Haltevorrichtung mit den Halteelementen relativ zum Querträger ausrichtbar ist, so daß beide Halteelemente gleichzeitig relativ zum Querträger ausgerichtet und somit die Ausrichtung der beiden Halteelemente an die Ausrichtung der Dachträgeraufnahmen relativ zueinander und relativ zum Querträger angepaßt werden kann.

Diese Ausrichtbarkeit ist zweckmäßigerweise dadurch erreicht, daß das mindestens eine der Halteelemente um eine quer zum Querträger und quer zu einer Längsrichtung der Dachträgeraufnahme verlaufende Achse drehbar ist und sich somit durch Drehung um die Achse an die Ausrichtung der Dachträgeraufnahmen relativ zueinander und relativ zum Querträger anpassen kann.

Um die Ausrichtung der Halteelemente und gegebenenfalls der Gehäusestruktur optisch unauffällig zu gestalten, ist vorzugsweise die Haltevorrichtung mit einer Außenverkleidung versehen, innerhalb welcher die Halteelemente und gegebenenfalls auch die Gehäusestruktur drehbar sind.

Hinsichtlich der bislang beschriebenen Ausführungsbeispiele wurde im Bezug auf die Ausrichtung der Haltevorrichtung relativ zum Querträger nicht näher eingegangen.

So könnte die Haltevorrichtung starr mit dem Querträger verbunden werden und der Querträger längenvariabel ausgebildet sein.

Um jedoch eine längenvariable Ausbildung des Querträgers zu vermeiden oder eine weitere Einstellmöglichkeit zur Anpassung an unterschiedliche Fahrzeugtypen zu schaffen, ist vorzugsweise vorgesehen, daß die Haltevorrichtung relativ zum Querträger bewegbar ist.

Dabei sind grundsätzlich alle Bewegungsmöglichkeiten denkbar.

Besonders zweckmäßig ist es jedoch, wenn die Haltevorrichtung längs des Querträgers verschiebbar ist und somit die Möglichkeit eröffnet, eine Anpassung an unterschiedliche Abstände der Dachträgeraufnahmen und gegebenenfalls auch unterschiedliche Ausrichtungen derselben relativ zueinander vorzunehmen.

Hinsichtlich der Ausbildung der Dachträgeraufnahme wurden bislang keine näheren Angaben gemacht.

So könnte die Dachträgeraufnahme beispielsweise eine am Dach vorgesehene Führungsschiene sein.

Dabei kann die Führungsschiene in das Dach des Kraftfahrzeugs versenkbar sein oder über das Dach des Kraftfahrzeugs überstehen, beispielsweise in Form eines über das Dach in der Art einer Schiene überstehenden geformten Blechfalzes.

Eine andere vorteilhafte Lösung sieht vor, daß die Dachträgeraufnahme eine Dachreling ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische Seitenansicht eines erfindungsgemäßen Dachträgers im Bereich einer Verbindung desselben mit einer Dachträgeraufnahme;
- Fig. 2: eine Ansicht in Richtung des Pfeils A in Fig. 1;
- Fig. 3: eine Ansicht ähnlich Fig. 1 bei abgenommenen Abschlußdeckel;

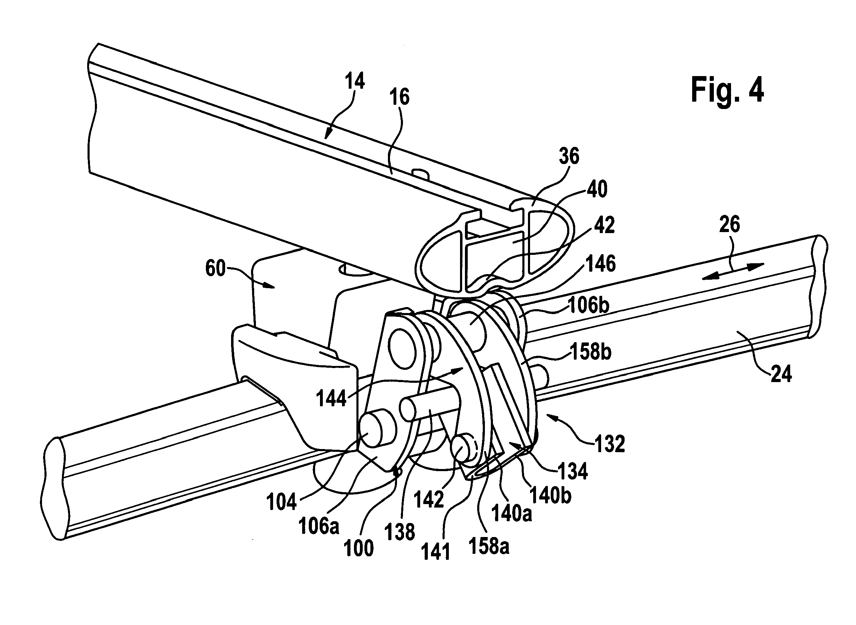

- Fig. 4: eine Ansicht ähnlich Fig. 3 ohne Darstellung einer Außenverkleidung und einer Gehäusestruktur und lediglich Darstellung von Halteelementen und Verschlußeinrichtung;
- Fig. 5: einen Schnitt längs Linie 5-5 in Fig. 1;
- Fig. 6: eine teilweise Darstellung der Halteelemente gemäß Fig.5 und des Verschlußmechanismus in einer Totpunktstellung und
- Fig. 7: eine Darstellung ähnlich Fig. 6 mit Darstellung des Verschlußmechanismus in einer Lösestellung.

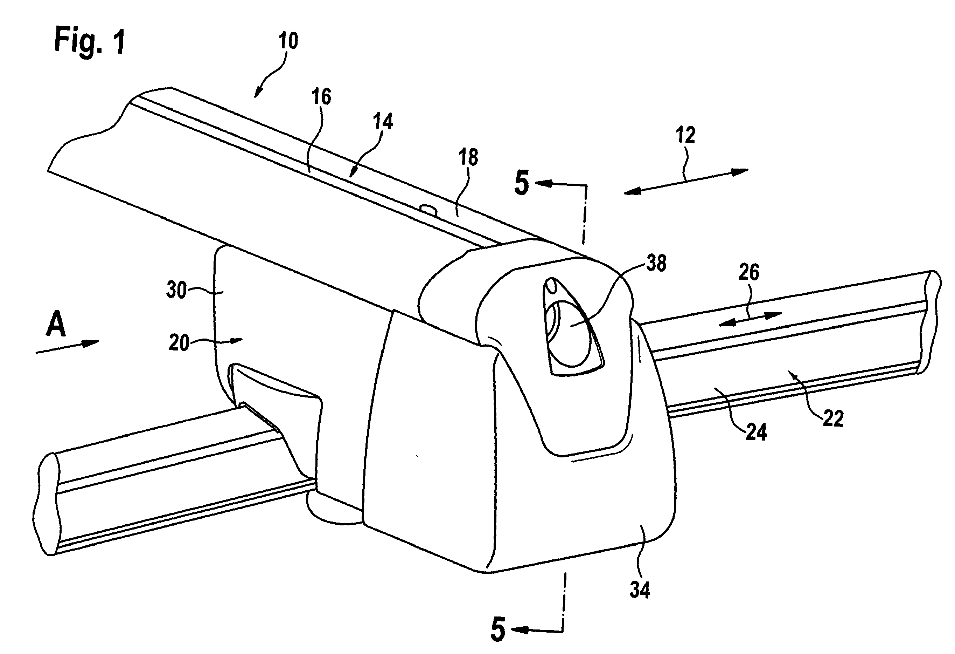

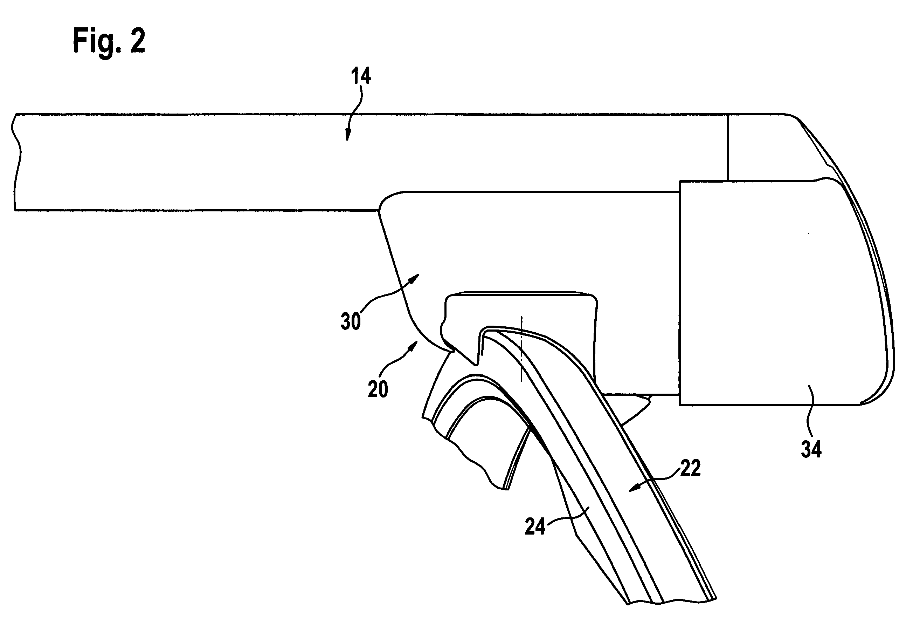

Ein Ausführungsbeispiel eines erfindungsgemäßen Dachträgers, dargestellt in Fig. 1 und 2, umfaßt einen sich quer zu einer Fahrzeuglängsrichtung 12 erstreckenden Querträger 14, an welchem verschiedene Dachlastenhalter, wie zum Beispiel Skiträger, Fahrradträger, Dachkoffer montierbar sind, wobei diese in einer T-Nut 16 der Querträger 14 montierbar sind.

An jeweiligen Endbereichen 18 der Querträger 14 sind als Ganzes mit 20 bezeichnete Haltevorrichtungen angeordnet, über welche eine Fixierung der Querträger 14 an fahrzeugseitig vorgesehenen Dachträgeraufnahmen 22 erfolgt, welche im in Fig. 1 und 2 dargestellten Fall als Dachreling mit einem Dachrelingträger 24 ausgebildet ist, wobei sich die beiden Dachrelingträger 24 mit eine Längsrichtung 26 ihrer zur Aufnahme der Haltevorrichtungen 20 vorgesehenen Bereichen ungefähr parallel zur Fahrzeuglängsrichtung 12 erstrecken.

Wie in Fig. 1 bis 3 dargestellt, umfaßt jede Haltevorrichtung 20 eine Außenverkleidung 30, welche auf einer der jeweils anderen Haltevorrichtung 20 abgewandten Seite eine Zugangsöffnung 32 aufweist, welche durch einen abnehmbaren Abschlußdeckel 34 verschließbar ist, der sowohl die Zugangsöffnung 32 als auch eine äußere Stirnseite 36 des jeweiligen Querträgers 14 übergreift und vorzugsweise mit einem Schloß 38 versehen ist, das seinerseits in einen über die Stirnseite 36 zugänglichen und vorzugsweise unterhalb der T-Nut 16 liegenden Innenraum 40 des Querträgers einführbar ist und durch Hintergreifen eines Vorsprungs 42 am Querträger 14 festlegbar ist, so daß dadurch der Abschlußdeckel 34 in seiner die Zugangsöffnung 32 der Außenverkleidung 30 sowie die Stirnseite 36 des Querträgers 14 überdeckenden Stellung festlegbar ist.

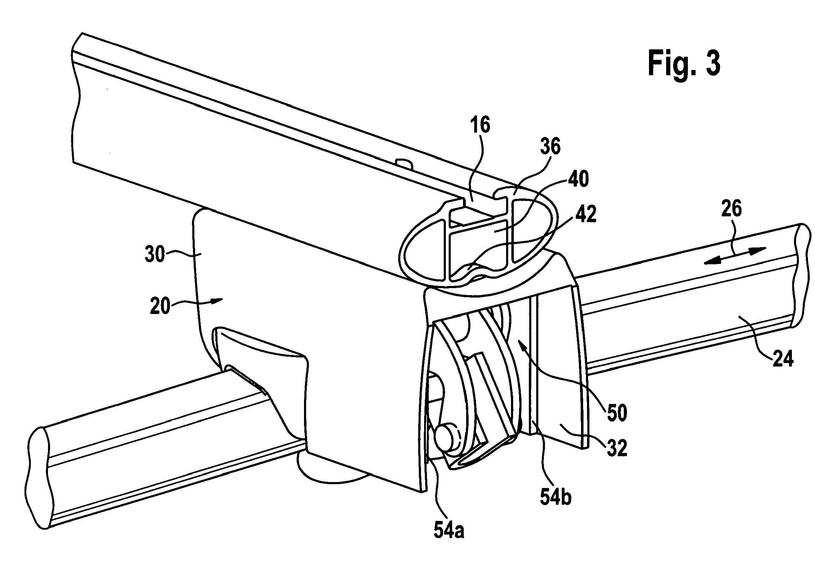

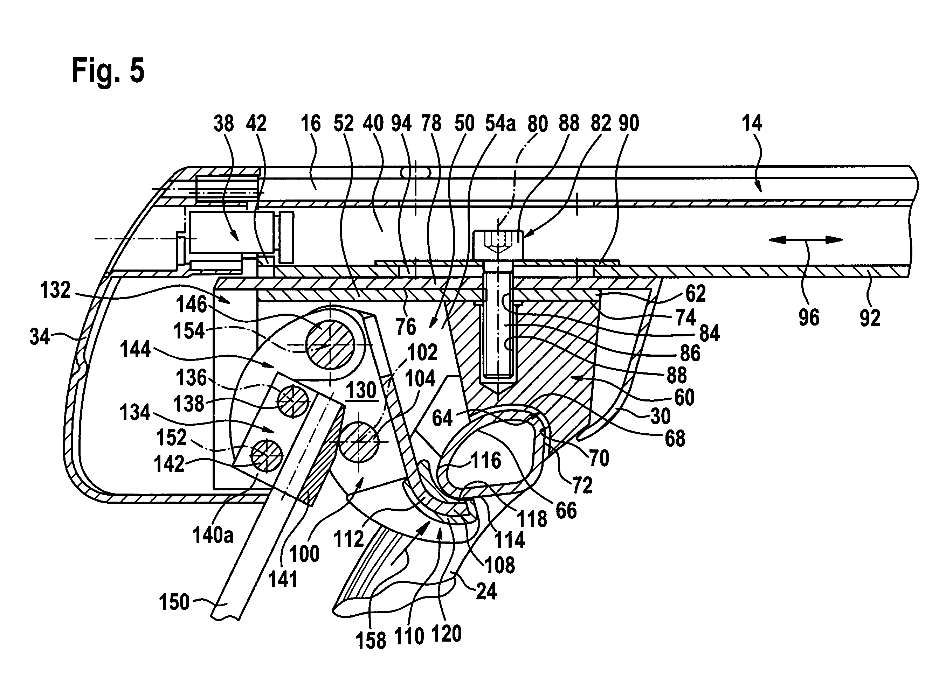

Wie in Fig. 3 und 5 dargestellt, umfaßt jede Haltevorrichtung 20 eine innerhalb der Außenverkleidung 30 angeordnete Gehäusestruktur 50, welche eine dem Querträger 14 zugewandte und diesen abstützende Basisplatte 52 sowie von der Basisplatte 52 weg und im Abstand voneinander verlaufende Seitenwangen 54a, b umfaßt, die mit der Basisplatte 52 ein im Querschnitt umgekehrtes U bilden.

An der Gehäusestruktur 50 ist ferner ein erstes Halteelement 60 vorgesehen, welches sich an der Basisplatte 52 mit einer Stützseite 62 abstützt und eine den Dachrelingträger 24 umfassende Aufnahme 64 aufweist, die einerseits Auflagefläche 66 auf einer Oberseite 68 des Dachrelingträgers 24 aufliegt und mit einer Seitenführungsfläche 70 an einer dem jeweils anderen Dachrelingträger 24 zugewandten Innenseite 72 des Dachrelingträgers 24 anliegt, so daß insgesamt die Aufnahme 64 den Dachrelingträger 24 an zwei quer zueinander verlaufenden Seiten, nämlich der Oberseite 68 und der Innenseite 72 umfaßt.

Das erste Halteelement 60 ist beispielsweise als Kunststoffkörper ausgebildet, der mit seiner Stützseite 62 an einer Unterseite 74 der Basisplatte 52 anliegt.

Die gesamte Gehäusestruktur 50 liegt ihrerseits mit einer Oberseite 76 an einer Halteplatte 78 der Außenverkleidung 30 an, die ihrerseits wieder den Querträger 14 trägt. Die Oberseite 76 der Gehäusestruktur 50 kann sich somit gegenüber der Halteplatte 78 gleitend bewegen, wobei die gleitende Bewegung auf eine Drehbewegung um eine Drehachse 80 reduziert ist. Dabei hat die Außenverkleidung 30 eine Form die die Drehbewegung der Gehäusestruktur 50 innerhalb derselben zuläßt, ohne daß die Außenverkleidung 30 sich selbst mitdreht. Vorzugsweise ist die Außenverkleidung 30 drehfest am Querträger 14 geführt.

Die Drehachse 80 wird festgelegt durch eine als Ganzes mit 82 bezeichnete Verbindungsschraube, die eine Bohrung 84 in der Basisplatte 52 durchgreift und mit einem Gewindeabschnitt 86 in eine Gewindebohrung 88 des ersten Halteelements 60 einschraubbar ist.

Durch die Drehbarkeit der Gehäusestruktur 50 mit dem Halteelement 60 ist dieses in der Lage, sich an unterschiedliche Ausrichtungen der Dachrelingträger 24 anzupassen.

Außerdem weist die Verbindungsschraube 82 einen Schraubenkopf 89 auf, der seinerseits eine Auflageplatte 90 durchsetzt, die auf einer unteren Wand 92 des Querträgers 14 aufliegt und ein von der Verbindungsschraube 82 durchsetztes Langloch 94 zumindest in einer Richtung quer zur Drehachse 80 übergreift.

Durch dieses Langloch 94 besteht die Möglichkeit, die gesamte Gehäusestruktur 50 mitsamt der Verbindungsschraube 82 und der Außenverkleidung 30 in Längsrichtung 96 des Querträgers 14 zu verschieben und somit eine Anpassung an unterschiedliche Abstände der Dachrelingträger 24 zu erreichen, so daß jeweils das erste Halteelement 60 mit seiner Aufnahme 64 so positionierbar ist, daß diese sowohl mit der Auflagefläche 66 als auch der Seitenführungsfläche 70 an dem Dachrelingträger 24, nämlich auf dessen Oberseite 68 und dessen Innenseite 72 anliegt. Dabei kann die Gehäusestruktur 50 mit der Außenverkleidung 30 mehr oder weniger weit in den Abschlußdeckel 34 eingeschoben werden.

An der Gehäusestruktur 50 ist ferner ein zweites Halteelement 100, ausgebildet in Form eines Schwenkhebels, um eine Schwenkachse 102 schwenkbar gelagert, die ungefähr parallel zu der Seitenführungsfläche 70 und damit auch ungefähr parallel zu einer Längsrichtung 26 des jeweiligen Dachrelingträgers 24 verläuft, wobei die Ausrichtung der Schwenkachse 102 durch Drehen der Gehäusestruktur 50 um die Drehachse 80 erfolgt.

Die schwenkbare Lagerung des zweiten Halteelements 100 erfolgt dabei über einen Lagerzapfen 104, der seinerseits drehbar in den Seitenwangen 54a, b der Gehäusestruktur 50 gelagert ist.

Das zweite Halteelement 100 ist vorzugsweise so ausgebildet, daß es zwei im Abstand voneinander angeordnete Seitenflansche 106a, b aufweist, die durch einen Verbindungssteg 108, der einstückig an die Seitenflansche 106a, b angeformt ist, miteinander verbunden sind. Dabei durchgreift der Lagerzapfen 104 die Seitenflansche 106a, b, während der Verbindungssteg 108 im Abstand von dem Lagerzapfen 104, und zwar auf einer dem Dachrelingträger 24 zugewandten Seite desselben verläuft.

Das zweite Halteelement 100 bildet seinerseits einen Spannarm 110, welcher sich ausgehend von der Schwenkachse 102 auf einer der Aufnahme 64 des ersten Halteelements 60 gegenüberliegenden Seite des Dachrelingträgers 24 erstreckt und einen beispielsweise konkav ausgebildeten Spannbereich 112 aufweist, welcher den Dachrelingträger 24 auf einer Unterseite 114 und einem sich an die Unterseite anschließenden Bereich 116 einer Außenseite des Dachrelingträgers 24 umgreift und somit auf den Dachrelingträger 24 im wesentlichen der Aufnahme 64 diagonal gegenüberliegend einwirkt.

Zum Ausgleich von weiteren Toleranzen bei der Einwirkung auf den Dachrelingträger 24 ist der Spannbereich 112 mit einer elastischen Ummantelung 120 versehen, welche insbesondere auf der konkaven Innenfläche 118 aufliegt und in der Lage ist, sich an die Form des Dachrelingträgers 24 im Bereich der Unterseite 114 und des sich an diese anschließenden Bereichs der Außenseite 116 des Dachrelingträgers 24 anzupassen.

Das zweite Halteelement 100 umfaßt außerdem noch einen Betätigungsarm 130, welcher sich auf einer dem Spannarm 110 gegenüberliegenden Seite der Schwenkachse 102 erstreckt und welcher durch einen als Ganzes mit 132 bezeichneten Verschlußmechanismus betätigbar ist.

Der Verschlußmechanismus 132 umfaßt einen Verschlußhebel 134, welcher um eine Hebelachse 136 schwenkbar an der Gehäusestruktur 50 gelagert ist, und zwar durch eine Schwenkachse 138, die in Lagerbohrungen der Seitenwangen 54a, b eingreift und in diesen drehbar gelagert ist.

Der Verschlußhebel 134 ist dabei im Querschnitt U-förmig ausgebildet, wobei Seitenschenkel 140a, 140b desselben von der Schwenkachse 138 durchsetzt sind und über einen einstückig angeformten Mittelschenkel 141 miteinander verbunden sind.

Im Abstand von der Schwenkachse 138 sind die Seitenschenkel 140 von einem Gelenkzapfen 142 durchsetzt, mit welchem ein Übertragungshebel 144 gelenkig mit dem Verschlußhebel 134 verbunden ist.

Ferner ist der Übertragungshebel 144 seinerseits noch über einen Gelenkzapfen 146 gelenkig mit dem Betätigungsarm 130 des zweiten Halteelements 100 verbunden, wobei der Gelenkzapfen 146 in einem Abstand von der Schwenkachse 102 angeordnet ist.

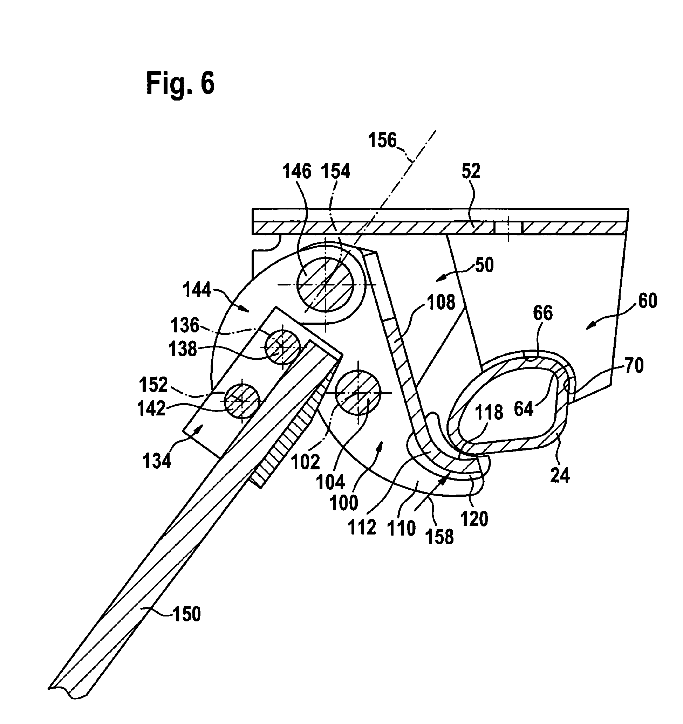

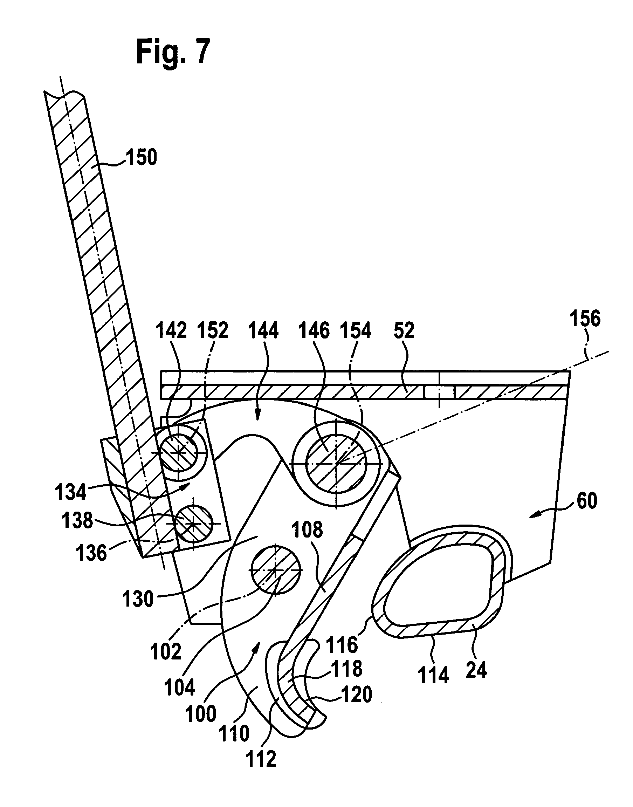

In den Verschlußhebel 134 ist aufgrund dessen U-förmiger Ausbildung mit den Seitenschenkeln 140a und dem Mittelschenkel 141 ein Betätigungsstab 150 einschiebbar, und zwar zwischen die Seitenschenkel 140a, b sowie den Mittelschenkel 141 einerseits und die Schwenkachse 138 sowie den Gelenkzapfen 142 andererseits, so daß mit dem Betätigungsstab 150 die Möglichkeit besteht, den Verschlußhebel 134 um die Hebelachse 136 zu verschwenken, und zwar von der in Fig. 5 dargestellten Übertotpunktstellung, die dadurch stabilisiert ist, daß der Mittelschenkel 141 an dem als Anschlag wirkenden Lagerzapfen 104 anliegt in eine in Fig. 6 dargestellte Totpunktstellung, in welcher eine Mittelachse 152 des Gelenkzapfens 142 in einer durch eine Mittelachse 154 des Gelenkzapfen 144 in die Hebelachse 136 verlaufende Ebene 156 liegt, und von der in Fig. 6 dargestellten Totpunktstellung in eine wie in Fig. 7 dargestellte Lösestellung, in welcher die Mittelachse 152 auf einer der Übertotpunktstellung gegenüberliegenden Seite der Ebene 156 liegt, die durch die Mittelachse 154 des Gelenkzapfens 144 und die Hebelachse 136 verläuft.

Wie ebenfalls in Fig. 7 dargestellt, ist in der Lösestellung der Spannarm 110 des als Hebel ausgebildeten zweiten Halteelements 100 von dem Dachrelingträger 24 soweit weggeschwenkt, daß die Haltevorrichtung 20 mit dem ersten Halteelement 60 von dem Dachrelingträger 24 abgehoben werden kann, und somit in seiner Freigabestellung.

Dagegen beaufschlagt der Verschlußhebel 134 in der in Fig. 5 dargestellten Übertotpunktstellung über den Übertragungshebel 144 den Betätigungsarm 130 des zweiten Halteelements 100 derart, daß der Spannarm 110 den Dachrelingträger zwischen der Aufnahme 64 des ersten Halteelements 60 und dem Spannbereich 112 des Spannarms 110 kraftschlüssig derart einspannt, daß eine Verschiebung der Halteelemente 60 und 100 relativ zum Dachrelingträger 24 in dessen Längsrichtung 26 nicht mehr möglich ist und außerdem der Dachrelingträger 24 formschlüssig zwischen dem ersten Halteelement 60 und dem Spannarm 110 aufgenommen ist, so daß in eine Bewegung in einer senkrecht zur Längsrichtung 26 des Dachrelingträgers 24 verlaufenden und durch eine erste und zweite Richtung aufgespannten Ebene bereits durch Formschluß ausgeschlossen ist und in einer dritten in Längsrichtung 26 des Dachrelingträgers 24 verlaufenden Richtung durch Kraftschluß festgelegt ist.

Somit bleibt der Spannarm 110 des zweiten Halteelements 100 bei der Übertotpunktstellung des Verschlußhebels 134 in seiner den Dachrelingträger 24 zwischen sich und der Aufnahme 64 einspannenden Fixierstellung festgelegt.

Um in der Übertotpunktstellung des Verschlußhebels 134 ständig mit einer Spannkraft 158 quer zur Längsrichtung 26 des Dachrelingträgers 24 auf diesen einwirken zu können, ist - wie bereits beschrieben - einerseits die Ummantelung 120 des Spannbereichs aus einem elastisch deformierbaren Material ausgebildet, andererseits gewährleistet aber auch der Übertragungshebel 144 aufgrund seiner zwischen dem Gelenkzapfen 142 und dem Gelenkzapfen 146 nicht geradlinig sondern sichelförmig gebogenen Ausführung eine gewisse federnde Längselastizität bezogen auf eine Bewegung zwischen den Gelenkzapfen 142 und 146 in Abstandsrichtung derselben, die einerseits erlaubt, den Verschlußhebel 134 über die in Fig. 6 dargestellte Totpunktstellung hinwegzubewegen, und andererseits noch in der Lage ist, auch in Übertotpunktstellung des Verschlußhebels 134 aufgrund einer federelastischen Wirkung den Betätigungsarm 130 federelastisch in Richtung seiner den Dachrelingträger 24 einspannenden Fixierstellung zu beaufschlagen.

Diese Elastizität des Übertragungshebels 144 läßt sich besonders günstig dann erreichen, wenn dieser durch zwei sichelförmige Hebelplatten 158a, b gebildet ist, die beiderseits des Verschlußhebels 134 und zwischen den Seitenflanschen 106a, b des zweiten Halteelements 100 angeordnet sind.

## Patentansprüche

1. Dachträger (10) für Kraftfahrzeuge mit einer Dachträgeraufnahme (22), umfassend einen Querträger (14) und endseitig des Querträgers (14) angeordnete Haltevorrichtungen (20), die relativ zueinander von einer Freigabestellung in eine Fixierstellung und umgekehrt bewegbare Halteelemente (60, 100) aufweisen und die durch die Halteelemente (60, 100) an der Dachträgeraufnahme fixierbar sind,
**dadurch gekennzeichnet, daß** ein Verschlußmechanismus (132) vorgesehen ist, mit welchem die Halteelemente (60, 100) relativ zueinander in die Fixierstellung bringbar sind, und daß der Verschlußmechanismus (132) einen bewegbaren Verschlußhebel (134) aufweist, welcher mindestens mit einem der Halteelemente (60, 100) derart zusammenwirkt, daß der Verschlußhebel (134) in einer Lösestellung die Freigabestellung der Halteelemente (60, 100) zuläßt, und daß der Verschlußhebel (134) über eine labile Totpunktstellung in eine neben dieser labilen Totpunktstellung liegende stabile Übertotpunktstellung bringbar ist, in welcher der Verschlußhebel (134) derart mindestens mit dem einen der Halteelemente (60, 100) zusammenwirkt, daß diese in ihrer Fixierstellung festgelegt sind.

2. Dachträger nach Anspruch 1, **dadurch gekennzeichnet, daß** der Verschlußmechanismus (132) ein mit dem Verschlußhebel (134) und mindestens einem der Halteelemente (100) gekoppeltes Übertragungselement (144) aufweist.

3. Dachträger nach Anspruch 2, **dadurch gekennzeichnet, daß** das Übertragungselement ein Übertragungsarm (144) ist.

4. Dachträger nach Anspruch 3, **dadurch gekennzeichnet, daß** der Übertragungsarm (144) mit dem Verschlußhebel (134) einen Kniehebelmechanismus bildet.

5. Dachträger nach Anspruch 4, **dadurch gekennzeichnet, daß** der Kniehebelmechanismus einen kurzen Hebelarm (134) und einen langen Hebelarm (144) aufweist.

6. Dachträger nach Anspruch 5, **dadurch gekennzeichnet, daß** der kurze Hebelarm durch den Verschlußhebel (134) und der lange Hebelarm durch den Übertragungsarm (144) gebildet ist.

7. Dachträger nach einem der Ansprüche 3 bis 6, **dadurch gekennzeichnet, daß** der Übertragungsarm(144) eine zum Erreichen der stabilen Übertotpunktstellung des Verschlußhebels (134) beitragende Längenelastizität aufweist.

8. Dachträger nach einem der voranstehenden Ansprüche, **dadurch gekennzeichnet, daß** die Halteelemente (60, 100) an der Dachträgeraufnahme (22) gegen eine Bewegung in mindestens einer quer zur Längsrichtung (26) der Dachträgeraufnahme (22) verlaufenden ersten Richtung formschlüssig festlegbar sind.

9. Dachträger nach Anspruch 8, **dadurch gekennzeichnet, daß** die Halteelemente (60, 100) an der Dachträgeraufnahme (22) gegen eine Bewegung in mindestens der ersten und einer quer zu dieser und quer zur Längsrichtung (26) der Dachträgeraufnahme (22) verlaufenden zweiten Richtung formschlüssig festlegbar sind.

10. Dachträger nach Anspruch 8 oder 9, **dadurch gekennzeichnet, daß** die Halteelemente (60, 100) an der Dachträgeraufnahme (22) gegen eine Bewegung in einer in Längsrichtung (26) der Dachträgeraufnahme (22) verlaufenden dritten Richtung (26) kraftschlüssig festlegbar sind.

11. Dachträger nach einem der Ansprüche 8 bis 10, **dadurch gekennzeichnet, daß** die Halteelemente (60, 100) an der Dachträgeraufnahme (22) durch Verspannen fixierbar sind.

12. Dachträger nach einem der Ansprüche 8 bis 11, **dadurch gekennzeichnet, daß** die Halteelemente (60, 100) die Dachträgeraufnahme in einander gegenüberliegenden Bereichen (68, 72, 114, 116) umgreifen.

13. Dachträger nach einem der voranstehenden Ansprüche, **dadurch gekennzeichnet, daß** ein erstes (60) der Halteelemente (60, 100) durch die Verschlußvorrichtung (132) unbewegbar an einer Gehäusestruktur (50) der Haltevorrichtung (20) angeordnet ist.

14. Dachträger nach Anspruch 13, **dadurch gekennzeichnet, daß** das andere (100) der Halteelemente (60, 100) durch die Verschlußvorrichtung (132) relativ zu der Gehäusestruktur (50) der Haltevorrichtung (20) bewegbar ist.

15. Dachträger nach Anspruch 14, **dadurch gekennzeichnet, daß** das andere (100) der Halteelemente (60, 100) an der Gehäusestruktur (50) bewegbar geführt ist.

16. Dachträger nach Anspruch 15, **dadurch gekennzeichnet, daß** das andere (100) der Halteelemente (60, 100) schwenkbar an der Gehäusestruktur (50) gelagert ist.

17. Dachträger nach Anspruch 16, **dadurch gekennzeichnet, daß** das andere (100) der Halteelemente (60, 100) auf einer Seite (130) einer Schwenkachse (102) durch den Verschlußmechanismus (132) beaufschlagbar ist und auf einer gegenüberliegenden Seite der Schwenkachse (102) mit einem auf die Dachträgeraufnahme (22) einwirkenden Spannbereich (112) versehen ist.

18. Dachträger nach einem der voranstehenden Ansprüche, **dadurch gekennzeichnet, daß** ein Betätigungselement (150) lösbar mit dem Verschlußhebel (134) verbindbar ist.

19. Dachträger nach einem der voranstehenden Ansprüche, **dadurch gekennzeichnet, daß** eines (60) der Halteelemente (60, 100) die Dachlast auf die Dachträgeraufnahme (22) überträgt.

20. Dachträger nach einem der voranstehenden Ansprüche, **dadurch gekennzeichnet, daß** eines (60) der Halteelemente (60, 100) relativ zum Querträger (14) ausrichtbar ist.

21. Dachträger nach Anspruch 20, **dadurch gekennzeichnet, daß** beide Halteelemente (60, 100) relativ zum Querträger (14) ausrichtbar sind.

22. Dachträger nach Anspruch 21, **dadurch gekennzeichnet, daß** eine Gehäusestruktur (50) der Haltevorrichtung (20) mit den Halteelementen (60, 100) relativ zum Querträger (14) ausrichtbar ist

23. Dachträger nach einem der Ansprüche 20 bis 22, **dadurch gekennzeichnet, daß** das Ausrichten des mindestens einen (60) der Halteelemente (60, 100) durch eine Drehung um eine quer zum Querträger (14) und quer zu einer Längsrichtung (26) der Dachträgeraufnahme (22) verlaufenden Achse (80) erfolgt.

24. Dachträger nach einem der voranstehenden Ansprüche, **dadurch gekennzeichnet, daß** die Haltevorrichtung (20) relativ zum Querträger (14) bewegbar ist.

25. Dachträger nach Anspruch 24, **dadurch gekennzeichnet, daß** die Haltevorrichtung (20) längs des Querträgers (14) verschiebbar ist.

26. Dachträger nach einem der voranstehenden Ansprüche, **dadurch gekennzeichnet, daß** die Dachträgeraufnahme (22) eine Dachreling ist.
